# EUROPEAN PATENT APPLICATION

(11) **EP 4 699 935 A1**
(43) Date of publication of application: **25.02.2026**
(21) Application number: 25196457.3
(22) Date of filing: 18.08.2025
(51) Int. Cl.: B64D 13/06, B01D 45/14, F24F 3/14

(54) **ROTATING FOG HARP COALESCER**

(30) Priority: 20.08.2024 US 202418809729
(71) Applicant: Hamilton Sundstrand Corporation, Charlotte, NC 28217-4578 (US)
(72) Inventor: SALTZMAN, David, Glastonbury, CT 06033 (US); KRAUTH, Kayla, Weatogue, CT 06089 (US); BRUNO, Louis J., Ellington, CT 06029 (US); IWASINSKI, Miles, Chicopee, MA 01020 (US); BOSWORTH, Alexander, Simsbury, CT (US)
(74) Representative: Dehns

(57) **Abstract**

A water extractor for use in an environmental control system includes a duct (106) having an inlet end (105) and an outlet end (103) and at least one fog harvester insert (110) mounted within the duct (106). The at least one fog harvester insert (110) being rotatable about an axis.

## Description

### BACKGROUND

Embodiments of the present disclosure relate to environmental control systems for a vehicle, and more particularly, to a water extractor suitable for use in an environmental control system of an aircraft.

A water extractor may be provided within an environmental control system to capture or remove free moisture from an airflow. The water collector may include a separation device that directs the moisture present within the airflow to outer walls of the separation device and direct the free moisture towards a drain port. Often times the water extractor may be substantially bulky and consume large amounts of space. Further, in environmental control systems having multiple water extractors, each water extractor is fluidly coupled to a different component of outlet.

### BRIEF DESCRIPTION

According to an embodiment, a water extractor for use in an environmental control system includes a duct having an inlet end and an outlet end and at least one fog harvester insert mounted within the duct. The at least one fog harvester insert being rotatable about an axis.

In addition to one or more of the features described above, or as an alternative, in further embodiments the at least one fog harvester insert includes a plurality of fog harvester inserts. The plurality of fog harvester inserts are arranged in series relative to a flow of medium through the duct.

In addition to one or more of the features described above, or as an alternative, in further embodiments a configuration of the plurality of fog harvester inserts is identical.

In addition to one or more of the features described above, or as an alternative, in further embodiments a configuration of the plurality of fog harvester inserts varies.

In addition to one or more of the features described above, or as an alternative, in further embodiments the plurality of fog harvester inserts are rotationally offset from one another.

In addition to one or more of the features described above, or as an alternative, in further embodiments only a portion of the plurality of fog harvester inserts is rotatable about the axis.

In addition to one or more of the features described above, or as an alternative, in further embodiments each of the plurality of fog harvester inserts is rotatable about the axis.

In addition to one or more of the features described above, or as an alternative, in further embodiments a motor is operably coupled to the at least one fog harvester insert to drive rotation of the at least one fog harvester insert about the axis.

In addition to one or more of the features described above, or as an alternative, in further embodiments the at least one fog harvester insert is driven about the axis by a flow of medium within the duct.

In addition to one or more of the features described above, or as an alternative, in further embodiments the at least one fog harvester insert includes a frame and a condensing material coupled to the frame.

In addition to one or more of the features described above, or as an alternative, in further embodiments the at least one fog harvester insert includes a hub arranged at a center of the frame and at least one support extending between the connecting the hub to an interior surface of the frame.

In addition to one or more of the features described above, or as an alternative, in further embodiments the condensing material includes at least one array of wires.

In addition to one or more of the features described above, or as an alternative, in further embodiments the condensing material includes at least one layer of a screen-like material.

According to an embodiment, a water extractor for use in an environmental control system includes a water separator having an inlet, and a water collector arranged downstream from and in series with the water separator relative to a flow of medium. At least one fog harvester insert is located downstream from the inlet of the water separator relative to the flow of medium. The at least one fog harvester insert is rotatable about an axis.

In addition to one or more of the features described above, or as an alternative, in further embodiments the at least one fog harvester insert is arranged upstream from the water collector.

In addition to one or more of the features described above, or as an alternative, in further embodiments the at least one fog harvester insert includes a plurality of fog harvester inserts.

In addition to one or more of the features described above, or as an alternative, in further embodiments only a portion of the plurality of fog harvester inserts is rotatable about the axis.

In addition to one or more of the features described above, or as an alternative, in further embodiments each of the plurality of fog harvester inserts is rotatable about the axis.

In addition to one or more of the features described above, or as an alternative, in further embodiments a motor is operably coupled to the at least one fog harvester insert to drive rotation of the at least one fog harvester insert about the axis.

In addition to one or more of the features described above, or as an alternative, in further embodiments the at least one fog harvester insert is driven about the axis by the flow of medium.

### BRIEF DESCRIPTION OF THE DRAWINGS

The following descriptions should not be considered limiting in any way. With reference to the accompanying drawings, like elements are numbered alike:
FIG. 1 is a schematic diagram of a portion of an environmental control system according to an embodiment;
FIG. 2 is a cross-sectional view of a water extractor according to an embodiment;
FIG. 3 is a perspective view of a fog harvester insert of a water separator according to an embodiment;
FIG. 4A is a detailed view of a condensing material of a fog harvester insert according to an embodiment; and
FIG. 4B is a detailed view of another condensing material of a fog harvester insert according to an embodiment.

### DETAILED DESCRIPTION

A detailed description of one or more embodiments of the disclosed apparatus and method are presented herein by way of exemplification and not limitation with reference to the Figures.

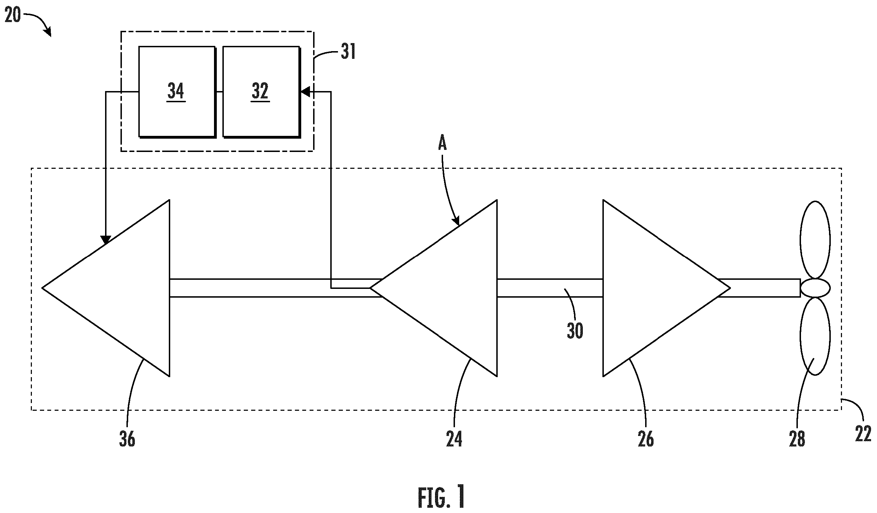

With reference now to the FIG. 1, an exemplary portion of an environmental control system 20, such as part of a pack of an environmental control system for example, is illustrated. As shown, the environmental control system (ECS) 20 includes an air cycle machine 22 having a turbine 24, and in some embodiments includes one or more other components, such as a compressor 26 and a fan 28 operably coupled to the turbine 24 by a rotatable shaft 30 for example. In an embodiment, the same flow of medium is provided to the compressor 26 and the turbine 24 in series. Accordingly, the medium may be at its highest pressure when output from the compressor 26 until reaching the inlet of the turbine 24 and may be a medium or mid-pressure when output from the outlet of the turbine 24.

In the illustrated, non-limiting embodiment, a water extractor 31 is arranged directly downstream from the outlet of the turbine 24, such as when the medium is at a middle pressure. As shown, the water extractor 31 may include a water separator 32 and a water collector 34 arranged in series relative to a flow of medium, with the water collector being arranged downstream form the water separator 32. The water separator 32 may be used to remove moisture, such as water for example, from the medium and the water collector 34 is operable to collect the removed moisture such that the medium output from the water collector 34 is drier than the medium provided to the water separator 32. Although the water separator 32 and the water collector 34 are schematically illustrated as separate components, it should be appreciated that embodiments where the two are integrally formed are within the scope of the disclosure. In the illustrated, non-limiting embodiment, the cool, dry medium output from the water collector 34 is provided to a second turbine 36. Although the second turbine 36 is illustrated as being arranged directly downstream from the water collector 34, it should be appreciated that in other embodiments, one or more additional components may be arranged between the outlet of the water collector 34 and the second turbine 36. Further, although the turbine 36 is illustrated as being part of the air cycle machine 22, embodiments where the turbine 36 is separate from the air cycle machine 22 are also within the scope of the disclosure.

It should be appreciated that the configuration of a portion of the environmental control system 20 described herein is intended as an example only and that an environmental control system having any suitable configuration is within the scope of the disclosure. Further, it should be understood that embodiments where the water separator 32 and water collector 34, in combination, are arranged downstream from any suitable component of the ECS 20 are also contemplated herein. In an embodiment, the water separator 32 is positioned within the ECS 20 to receive a flow of medium, such as a fluid or air A for example, that is cool and has condensed water vapor entrained or suspended therein resulting in a fog-like consistency.

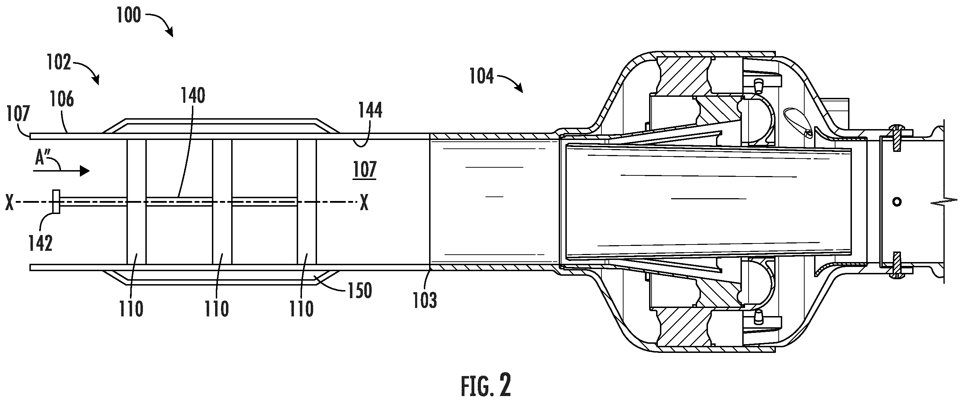

With reference now to FIG. 2, an example of a water extractor 100, such as the mid-pressure water extractor 31 of FIG. 1, is illustrated in more detail. As shown, the water extractor 100 includes a water separator 102 and a water collector 104 arranged in series relative to a flow of medium A. The water collector 104 may be arranged downstream from an outlet end 103 of the water separator 102 relative to the flow. Further, the water collector 104 may be a conventional water collector. The water separator 102 may be used to remove moisture, such as water for example, from the medium A and the water collector 104 is operable to collect the removed moisture such that the medium A output from the water collector 104 is drier than the medium A provided to the water separator 102. Although the water separator 102 and the water collector 104 are schematically illustrated as separate components, it should be appreciated that embodiments where the two are integrally formed are also within the scope of the disclosure.

With continued reference to FIG. 2, in the illustrated, non-limiting embodiment, the water separator 102 includes at least one fog harvester insert 110 positionable within a duct or conduit 106 connected to a component of an environmental control system. The at least one fog harvester insert 110 may be arranged within the duct 106 at any suitable location, such as downstream from an outlet of the turbine 24 and upstream from the inlet of the water collector 104. In embodiments where the water separator 102 includes one or more inserts fog harvester inserts, the fog harvester insert(s) 110 may be permanently or removably mountable within the interior of the duct 106 and/or to a portion of the turbine 24.

In the illustrated, non-limiting embodiment, the water separator 102 includes three fog harvester inserts 110. However, it should be understood that a water separator 102 having any number of fog harvester inserts 110, including a single fog harvester insert, two fog harvester inserts, or more than three fog harvester inserts for example, are within the scope of the disclosure. In embodiments including multiple fog harvester inserts, the plurality of fog harvester inserts 110 may be stacked relative to one another along the longitudinal axis X of the duct 106, such that the medium A is configured to flow through the plurality of fog harvester inserts 110 in series. In such embodiments, the fog harvester inserts 110 may be positioned directly adjacent to one another, or alternatively, may be spaced apart from one another, such as along the axis of the duct 106 for example.

Further, in embodiments including multiple fog harvester inserts 110, the configuration of each of the plurality of fog harvester inserts 110 may be substantially identical, or alternatively, may be different. In an embodiment, a downstream fog harvester insert 110 may be clocked or rotated relative to an upstream fog harvester insert 110 to create an indirect flow path through the duct 106 and maximize the interaction between the air flow and the fog harvester inserts 110. Since the water droplet sizes that are formed on the fog harvester inserts 110 in series should increase due to coalescing, in an embodiment, the fog harvester inserts 110 are designed such that the openings of each insert increase in series with the flow of medium A.

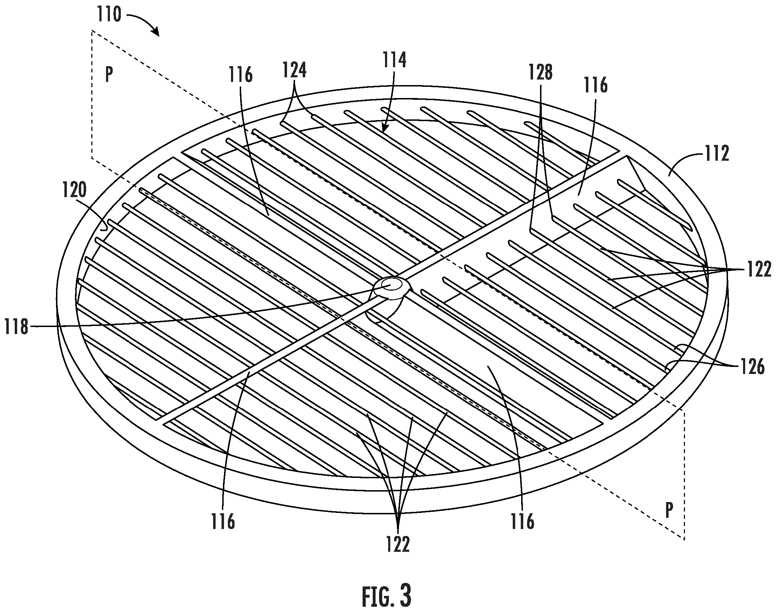

With reference to FIG. 3, an example of a fog harvester insert 110 is illustrated in more detail. In the illustrated, non-limiting embodiment, each fog harvester insert 110 includes a frame 112 and a condensing material 114 installed about the frame 112. The frame 112 may be formed in any suitable manner including, but not limited to cast, injection molded, additively formed, and machined for example. The configuration of the frame 112 may but need not be complementary to the interior of the duct 106 at the location where the fog harvester insert 110 is receivable. In an embodiment, the outer diameter of the frame 112 is slightly smaller than the inner diameter of the duct 106 such that a clearance exists therebetween. In the illustrated, non-limiting embodiment, the frame 112 defines a periphery of the fog harvester insert 110 and is generally circular in shape. The frame 112 may additionally include at least one support 116 extending between and connecting a hub 118 arranged at a center of the frame 112 to an interior surface 120 of the frame 112. In the illustrated, non-limiting embodiment, the fog harvester insert 110 includes a four supports 116 equidistantly spaced about the hub 118, each being generally perpendicular to the two adjacent supports. However, embodiments having only a single support, two supports, three supports, or more than four supports and supports that are non-uniformly spaced are also contemplated herein.

In the illustrated, non-limiting embodiment, the condensing material 114 includes a plurality of wires 122. Although the wires 122 are illustrated as having a substantially linear configuration, embodiments where one or more wires has another configuration, such as where the wires 122 have a spiral or helical configuration are also within the scope of the disclosure. The plurality of wires 122 may be made of any suitable material. Examples of suitable materials include, but are not limited to steel, steel alloys, copper, aluminum, other metals or metal alloys, composites, nylon, polyester, rayon, or another suitable polymer or plastic material, or any combination thereof.

The wires 122 may be arranged within one or more arrays. In the illustrated, non-limiting embodiment of FIG. 3, the fog harvester insert 110 includes two arrays of wires 122. However, it should be understood that any number of arrays is contemplated herein. As shown, each array may be positioned between a plane P extending through the center of the frame 112 and an interior surface of the frame separated from the plane by an axial distance (measured perpendicular to the plane P) equal to the radius of the frame 112. Although the wires 122 within an array are illustrated as being parallel to one another, it should be understood that in other embodiments, the wires within an array may have another configuration.

In an embodiment, each wire 122 within an array has a first end 124 coupled to the interior surface 120 of the frame 112 at a first location and a second end 126 of coupled to the interior surface 120 of the frame 112 at a second location. In the illustrated, non-limiting embodiment, the first and second location of each wire 122 may be arranged within a plane oriented parallel to the plane P extending through the center of the frame 112. However, embodiments where the first and second location are not arranged within a plane parallel to plane P are also within the scope of the disclosure. In embodiments of a fog harvester insert 110 including one or more supports 116, the wires 122 may extend through corresponding holes 128 formed in a support 116, as shown in FIG. 3. However, in other embodiments, the first end 124 of each wire 122 may be coupled to the interior surface 120 of the frame 112 and the second end 126 of each wire 122 may be coupled to an adjacent support 116, such as to the surface closest to the first end 124 for example. In such a configuration, the first and second ends 124, 126 of each wire 122 may be arranged within a plane oriented parallel to the plane P extending through the center of the frame 112 or may have another configuration. It should be understood that the configuration of wires 122 illustrated and described herein is intended as an example only.

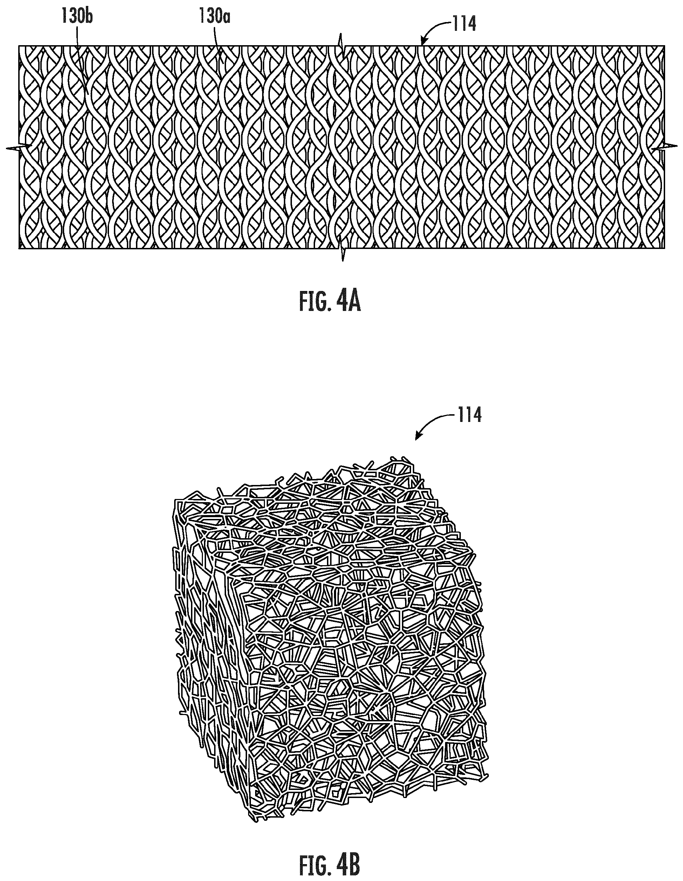

Alternatively, or in addition, the condensing material 114 may include at least one layer of mesh or screen-like material having small holes formed therein (see FIG. 4A). In an embodiment, the condensing material 114 includes a plurality of layers of screen-like material 130a, 130b arranged in an overlapping relationship. In embodiments where the condensing material 114 includes a plurality of layers 130a, 130b, the layers may be substantially identical in configuration or may vary. For example, the size of the openings within each layer of screen-like material 130a, 130b may vary. Alternatively, or in addition, the openings of one of the layers of screen-like material 130a, 130b may be offset in one or more directions from an adjacent layer of screen-like material. In other embodiments, such as shown in FIG. 4B, the condensing material 114 may include one or more layers of randomly structured material having openings of varying sizes formed therein. It should be understood that the condensing materials 114 of a fog harvester insert 110 illustrated and described herein are intended as an example only and that any suitable material that allows a fluid such as air to flow therethrough may be used as a condensing material.

In operation, a medium A is provided to the inlet end 105 of the water extractor 100. As the medium A flows through the one or more fog harvester inserts 110, water droplets collect on the surface of the condensing material 114, or between adjacent layers of the condensing material 114 for example. As a result, the medium A output from the water separator 102 is dried, dehumidified and/or contains larger water droplets than the inlet air.

With reference again to FIG. 2, the at least one fog harvester insert 110 may be movably mounted, for example rotatably mounted, within the interior 107 of the duct 106. In embodiments including a plurality of fog harvester inserts 110, only some of the fog harvester inserts 110 may be movable, or alternatively, all of the fog harvester inserts 110 may be movable within the duct 106. In embodiments where multiple fog harvester inserts 110 are configured to rotate, the fog harvester inserts 110 may rotate at the same speed, or alternatively, at different speeds. In embodiments where multiple fog harvester inserts 110 are driven by the same source, a geared interface or other transmission mechanism may be used to control the relative rotational speed of each fog harvester insert 110.

At least one fog harvester insert 110 is supported within the interior 107 of the duct 106 by a shaft 140. In an embodiment, each of the plurality of fog harvester inserts 110 is supported by and operably coupled to the same shaft 140. However, embodiments where one or more fog harvester inserts 110 is supported separately from another of the fog harvester inserts 110, such as by a separate shaft for example, are also contemplated herein. The at least one fog harvester insert 110 may be rotatably driven by rotation of the shaft 140 about its axis. In the illustrated, non-limiting embodiment, the shaft 140 is driven by a motor 142 operably coupled thereto. However, in other embodiments, the shaft 140 may be driven by another suitable source. For example, the shaft 140 may be operably coupled to the impeller of the upstream turbine such that rotation of the turbine drives rotation of one or more fog harvester inserts 110.

Alternatively, the flow of medium A moving through the duct 106 may be sufficient to drive rotation of a fog harvester insert 110. For example, the one or more supports 116 of the fog harvester insert 110 may be designed to have a surface arranged at an angle relative to the flow of medium A through the duct 106. Similar to a turbine blade, as the flow of medium A engages a surface of the support 116, a force is transmitted to the support 116 causing the fog harvester insert 110 to rotate about the axis. When rotation of the fog harvester insert 110 is driven by the flow of medium A, the rotational speed of the fog harvester insert 110 is coupled to the velocity of the flow of medium A within the duct 106. In such embodiments, the at least one fog harvester insert 110 may be configured to rotate relative to the shaft 140 or may be configured to rotate with the shaft 140.

As previously described, droplets of water coalesce on the condensing material 114 as the flow of medium A passes therethrough. By rotating one or more of the fog harvester inserts 110 about an axis, a centrifugal force is applied to the water droplets. This centrifugal force causes the droplets to separate from the condensing material 114. The droplets are projected radially outwardly, such as into contact with an interior surface 144 of the duct 106 adjacent to the fog harvester insert 110. In an embodiment, a drain 150 may be integrated into the duct 106 adjacent to the one or more fog harvester inserts 110 such that any of the water in contact with the interior surface 144 of the duct 106 may fall via gravity to the drain 150 for removal from the system. From the drain 150, the water can be exhausted overboard, or alternatively, can be redirected to another component of the ECS 20, or alternatively, to another system or component of the aircraft.

In standard stationary fog harp assemblies, gravity is relied upon to pull water droplets of a sufficient size that have accumulated on the surface of the condensing material downwardly to a drain. Rotation of the at least one fog harvester insert 110 eliminates this dependency on gravity to move the water droplets. The force exerted on the water droplets is dependent on the rotational speed of the fog harvester insert 110. Accordingly, by rotating the at least one fog harvester insert 110, the water droplets on the condensing material 114 are configured to separate therefrom at a much smaller droplet size.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A water extractor for use in an environmental control system, the water extractor comprising:
a duct (106) having an inlet end (105) and an outlet end (103); and
at least one fog harvester insert (110) mounted within the duct (106), the at least one fog harvester insert (110) being rotatable about an axis.

2. The water extractor of claim 1, wherein the at least one fog harvester insert (110) includes a plurality of fog harvester inserts (110), the plurality of fog harvester inserts (110) being arranged in series relative to a flow of medium through the duct (106).

3. The water extractor of claim 2, wherein a configuration of the plurality of fog harvester inserts (110) is identical; or
wherein a configuration of the plurality of fog harvester inserts (110) varies; or
wherein the plurality of fog harvester inserts (110) are rotationally offset from one another; or
wherein only a portion of the plurality of fog harvester inserts (110) is rotatable about the axis; or
wherein each of the plurality of fog harvester inserts (110) is rotatable about the axis.

4. The water extractor of any preceding claim, further comprising a motor (142), the motor (142) being operably coupled to the at least one fog harvester insert to drive rotation of the at least one fog harvester insert about the axis.

5. The water extractor of any preceding claim, wherein the at least one fog harvester insert is driven about the axis by a flow of medium within the duct (106).

6. The water extractor of any preceding claim, wherein the at least one fog harvester insert (110) includes a frame (112) and a condensing material coupled to the frame (112).

7. The water extractor of claim 6, wherein the at least one fog harvester insert further comprises:
a hub (118) arranged at a center of the frame (112); and
at least one support (116) extending between the connecting the hub (118) to an interior surface of the frame (112).

8. The water extractor of claim 6 or 7, wherein the condensing material includes at least one array of wires (122).

9. The water extractor of any of claims 6, 7 or 8, wherein the condensing material includes at least one layer of a screen-like material (130a, 130b).

10. A water extractor for use in an environmental control system, the water extractor comprising:
a water separator (102) having an inlet;
a water collector (34) arranged downstream from and in series with the water separator (102) relative to a flow of medium; and
at least one fog harvester insert (110) located downstream from the inlet of the water separator (102) relative to the flow of medium, the at least one fog harvester insert (110) being rotatable about an axis.

11. The water extractor of claim 10, wherein the at least one fog harvester insert (110) is arranged upstream from the water collector.

12. The water extractor of claim 10, wherein the at least one fog harvester insert (110) includes a plurality of fog harvester inserts (110).

13. The water extractor of claim 12, wherein only a portion of the plurality of fog harvester inserts (110) is rotatable about the axis.

14. The water extractor of claim 12, wherein each of the plurality of fog harvester inserts (110) is rotatable about the axis.

15. The water extractor of any of claims 10-14, further comprising a motor (142), the motor (142) being operably coupled to the at least one fog harvester insert (110) to drive rotation of the at least one fog harvester insert (110) about the axis; and/or
wherein the at least one fog harvester insert (110) is driven about the axis by the flow of medium.
